# FASCICULE DE BREVET EUROPEEN

(11) **EP 1 414 760 B1**
(45) Date de publication et mention de la délivrance du brevet: **05.09.2007**
(21) Numéro de dépôt: 02779611.9
(22) Date de dépôt: 05.08.2002
(51) Int. Cl.: C03B 25/08, C03C 17/32, E06B 3/54

(54) **PROCEDE DE TRAITEMENT D'UN VITRAGE FEUILLETE ET APPLICATION**
VERFAHREN ZUR BEHANDLUNG VON EINER VERBUNDGLASSCHEIBE UND ANWENDUNG
METHOD FOR TREATING A LAMINATED GLASS SHEET AND USE THEREOF

(30) Priorité: 06.08.2001 FR 0111468
(43) Date de publication de la demande: 06.05.2004
(73) Titulaire: SAINT-GOBAIN GLASS FRANCE, 92400 Courbevoie (FR)
(72) Inventeur: BORDEAUX, Frédéric, F-60200 Compiegne (FR)
(74) Mandataire: Muller, René
(86) Numéro de dépôt international: PCT/FR2002/002798
(87) Numéro de publication internationale: WO 2003/014033

(56) Documents cités:
- EP-A- 0 354 001
- EP-A- 0 592 862
- EP-A- 0 620 134
- US-A- 3 387 963

## Description

La présente invention se rapporte au domaine des vitrages feuilletés. Elle concerne plus particulièrement un procédé de traitement d'un vitrage feuilleté en vue d'une opération ultérieure où le vitrage sera porté à une température d'au moins 80 ou 100°C.

Parmi les différents procédés de transformation ou d'équipement de vitrages, certains requièrent de porter le vitrage, ou au moins une partie de ceux-ci à des températures élevées, de l'ordre de 80 à 100°C ou plus. C'est le cas par exemple, lorsque l'on dote le vitrage d'équipements en matière plastique formés in situ ou appliqués à chaud sur le vitrage.

On utilise en particulier la technique de surmoulage (ou encapsulation) pour réaliser un élément profilé en particulier à la périphérie d'un vitrage, l'élément profilé courant sur au moins une partie de la périphérie du vitrage et adhérant à au moins une face du vitrage : on place le vitrage ou au moins une partie du vitrage dans un moule comportant une cavité correspondant au profil de l'élément que l'on veut réaliser et l'on injecte dans le moule une matière de moulage qui est soit une matière plastique fondue soit une composition réactive.

Que ce soit pour des raisons liées à la viscosité de la matière fondue ou à la réactivité de la composition (qui peut nécessiter un apport de chaleur ou bien générer de la chaleur), le verre est généralement exposé dans le moule à une température élevée, de l'ordre d'au moins 100°C, pendant la durée du cycle d'injection, qui dure souvent quelques minutes.

Cette technique, bien maîtrisée avec des vitrages monolithiques pose quelques difficultés lorsqu'on essaye de l'appliquer à des vitrages feuilletés.

Les vitrages feuilletés sont constitués par l'association d'au moins deux feuilles de verre reliées les unes aux autres par un film intercalaire thermoplastique.

Lorsqu'on réalise une fabrication de vitrages encapsulés feuilletés, une proportion importante des produits sortant du moule présentent des défauts au niveau du verre feuilleté sous la forme de bulles qui se sont formées à l'intérieur de la structure feuilletée. Le nombre de bulles peut être très élevé, de l'ordre de 50 à 200 bulles visibles à l'oeil nu par cm² de surface de vitrage.

Le mécanisme de formation de ces bulles n'est pas encore complètement connu, mais il est certain qu'il est activé thermiquement, et que l'apparition des bulles est directement liée aux conditions de température qui règnent dans le moule au cours de l'opération de surmoulage.

Il y a lieu de noter que toute opération de traitement, de transformation ou d'équipement mettant en oeuvre un processus thermique à 80 ou 100°C ou plus est donc susceptible d'engendrer le même genre de défaut dans le produit final.

Un moyen de résoudre ce problème peut résider dans l'adaptation des procédés de traitement, transformation ou équipement, c'est-à-dire par exemple l'adaptation de l'outil d'encapsulation, mais cette voie s'annonce délicate et surtout coûteuse puisqu'elle est susceptible de remettre en cause des procédés industriels déjà développés.

Il serait donc souhaitable de trouver une solution à ce problème, en amont de l'opération de sollicitation thermique, c'est-à-dire susceptible de s'appliquer au vitrage lui-même.

C'est l'objectif que la présente invention se proposait d'atteindre.

A cet égard l'invention a pour objet un procédé de traitement d'un vitrage feuilleté en vue d'une opération ultérieure où le vitrage sera soumis à une forte sollicitation thermique, notamment à une température d'au moins 80°C, notamment au moins 100°C, selon la revendication 1.

Contre toute attente, les inventeurs ont constaté qu'un conditionnement thermique préalable du vitrage feuilleté, dans des conditions contrôlées, permettait d'inhiber le mécanisme de formation de bulles lorsque le vitrage feuilleté est ultérieurement soumis à une sollicitation thermique telle que celles décrites précédemment.

Le procédé de conditionnement thermique selon l'invention repose sur deux paramètres essentiels, à savoir la vitesse de montée en température et la durée de l'exposition à la température de traitement.

L'invention a ainsi mis en évidence :
- d'une part, qu'un apport brutal de calories à un vitrage feuilleté provoque l'apparition de bulles et ce même si la température effective du vitrage n'a pas encore atteint la valeur limite connue pour laquelle le vitrage est présumé rester intact,
- d'autre part, qu'un chauffage progressif non seulement ne produit pas en soi l'apparition de bulles, mais encore a un effet positif sur la résistance ultérieure du vitrage dans des conditions thermiques bien plus rudes, pour autant qu'il soit suffisamment prolongé.

Un autre paramètre avantageux est le temps de repos avant opérations ultérieures.

Bien que cela ne soit encore qu'une supposition, il est possible que le conditionnement thermique selon l'invention provoque une modification du film thermoplastique intercalaire au sein du vitrage feuilleté, qui empêcherait l'apparition des bulles. Le fait qu'une durée minimale de chauffage d'une ou plusieurs heures soit requise laisse à penser que cette modification est gouvernée par une cinétique lente.

Selon l'invention, on amène progressivement le vitrage à une température de traitement, c'est-à-dire que le vitrage n'est pas directement placé dans une enceinte ou mis en contact avec un corps dont la température est la température de traitement, mais que l'on chauffe le vitrage avec une vitesse de montée en température (non infinie) modérée, de préférence inférieure à 10°C/min.

Avantageusement, on chauffe progressivement le vitrage jusque dans la plage de température de l'ordre de 80 à 140°C , en particulier de 90 à 140 °C, notamment de 100 ou 110 à 140°C. A l'intérieur de cette plage, la résistance de l'assemblage feuilleté au bullage s'améliore sensiblement avec l'augmentation de la température. Une efficacité suffisante est généralement obtenue pour des températures de traitement de l'ordre de 90 à 110 °C.

Les résultats du traitement sont aussi améliorés avec l'allongement de la durée du chauffage.

Le programme de chauffage peut consister en une montée en température progressive et continue à une vitesse de montée en température unique, ou bien selon plusieurs tranches caractérisées par des vitesses de montée en température différentes, chacune modérée, de préférence inférieure à 10°C/min.

Suivant une variante avantageuse, le programme de chauffage comprend une montée en température progressive jusqu'à une température de traitement T₁ inférieure ou égale à 150°C, et au moins un palier de température chacun à une température de traitement Tᵢ (où i est un entier non nul) inférieure ou égale à 150°C. Chaque température de traitement Tᵢ est avantageusement choisie dans la plage de 80 à 140 ° C, notamment dans les plages de 90 à 140 , 100 à 140 °C.

Dans le cas de plusieurs paliers de température, ceux-ci peuvent être séparés par une phase intermédiaire de montée ou de descente en température, de préférence à une vitesse de montée en température_inférieure à 10°C/min.

Au total, la durée du chauffage est avantageusement inférieure ou égale à 16 heures. Au-delà de 16 heures de chauffage, on n'observe en effet pas d'amélioration significative de l'aptitude du vitrage feuilleté à résister à une sollicitation thermique sans apparition de bulles.

Suivant une réalisation avantageuse, le conditionnement thermique comporte après le chauffage, une étape où l'on laisse le vitrage refroidir jusqu'à une température T₂ inférieure à la ou à la dernière température de traitement, et on le maintient éventuellement à cette température.

On a en effet observé qu'une période de repos, de préférence courte, du vitrage feuilleté après le chauffage améliore significativement la faculté du vitrage feuilleté à endurer une sollicitation thermique. Le refroidissement jusqu'à la température T₂ peut être rapide ou progressif.

De préférence T₂ est la température ambiante, c'est-à-dire de l'ordre de 15à30°C.

Il n'est pas souhaitable toutefois que le refroidissement et l'éventuel maintien à température inférieure du vitrage soient trop longs : on observe une augmentation du phénomène de bullage pour des vitrages qui ont été conservés trop longtemps avant d'être utilisés dans les conditions thermiques critiques. En effet, la modification liée au conditionnement thermique est au moins en partie réversible. C'est pourquoi la durée t₂ du refroidissement et du maintien éventuel à la température T₂ est de préférence inférieure à 24 heures, notamment de 1 à 7 heures, en particulier de 1 à 4 heures.

Le procédé selon l'invention s'applique à toutes sortes de verres feuilletés. Les plus classiques sont constitués d'au moins deux feuilles de verre flotté d'au moins 1 mm d'épaisseur chacune, avantageusement de 1 à 4 mm, en particulier d'au moins 2 mm d'épaisseur chacune, reliées entre elles par un film thermoplastique translucide, en une matière choisie notamment parmi le poly(butyral de vinyle) (PVB), de composites multicouches à base de PVB tels que les tricouches PVB/PET avec couche antisolaires/PVB (où PET désigne le polytéréphtalate d'éthylène), ou des copolymères vinyliques, notamment à base d'éthylène et de monomère vinylique, fluorure de vinylidène ou acétate de vinyle. De manière générale, des couches fonctionnelles diverses peuvent être prévues sur au moins une face d'au moins un élément en feuille du vitrage feuilleté.

Le procédé de préparation de vitrages selon l'invention trouve des applications lors des mises en oeuvre des vitrages feuilletés dans des procédés variés, qui ont en commun de soumettre le vitrage à des sollicitations thermiques pendant plusieurs minutes, comportant notamment une opération dans laquelle le vitrage est porté à une température d'au moins 80 ou 100°C.

Ainsi le procédé de traitement selon l'invention peut être destiné à préparer un vitrage feuilleté à une opération de surmoulage.

Selon la matière surmoulée, les conditions thermiques du procédé varient mais imposent toujours des sollicitations thermiques fortes du vitrage.

Ainsi, pour le surmoulage de thermoplastiques, tels que le poly(chlorure de vinyle) (PVC) ou des oléfines thermoplastiques (TPO) ou des élastomères thermoplastiques (TPE), on dépose sur le vitrage un primaire d'adhérence thermoactivable. On place donc dans la cavité d'un moule « froid », c'est-à-dire à température ambiante, le vitrage chauffé à environ 80 à 120°C pour activer le primaire, puis l'on injecte la matière plastique fondue à une température de l'ordre de 180°C. C'est essentiellement le contact avec la matière injectée qui provoque la sollicitation thermique.

Pour le surmoulage d'élastomères réticulables, tels que le caoutchouc éthylène/propylène/diène (EPDM), on place le vitrage « froid », c'est-à-dire à température ambiante, dans la cavité d'un moule chauffé à une température d'environ 160 à 200°C, puis l'on injecte la matière plastique à une température d'environ 80 à 100°C. Dans ce cas, c'est le contact du vitrage avec le moule chaud, puis avec la matière, qui provoque la sollicitation thermique.

Enfin, pour le surmoulage d'une composition réactive, comme dans le cas de l'injection réactive de polyuréthanne (RIM pour *Reaction Injection Molding*), on place le vitrage « froid », c'est-à-dire à température ambiante, dans la cavité d'un moule chauffé à une température plus modérée d'environ 80 à 100°C, puis l'on injecte une composition dont la température peut s'élever sous l'effet de la réaction exothermique jusqu'à environ 120°C. Dans ce cas, c'est l'échauffement de la matière en contact avec le vitrage qui provoque la sollicitation thermique.

Le procédé selon l'invention trouve aussi à s'appliquer dans une autre technique, où l'on dépose par extrusion un élément profilé sur la surface du vitrage, notamment par extrusion de polyuréthanne monocomposant ou d'élastomère thermoplastique. Ce procédé peut comprendre en outre une opération de rectification du profilé extrudé par surmoulage d'un composant additionnel ou de remplacement, dans une partie localisée du vitrage.

Comme dit précédemment, il est avantageux de réaliser le conditionnement thermique moins de 24 heures avant de procéder à l'opération de transformation ultérieure ; ainsi le procédé de traitement selon l'invention peut être intégré comme étape préliminaire du procédé correspondant effectué chez le transformateur.

Les exemples suivants illustrent l'invention.

Dans un vitrage feuilleté de la structure suivante :
Verre flotté 2.1 mm / intercalaire de PVB 0.76 mm / verre flotté 2.1 mm
on a préparé des échantillons carrés de 5 cm de côté que l'on a soumis au conditionnement thermique suivant :
- chauffage de la température ambiante jusqu'à une température T₁ dans une étuve avec une vitesse de montée en température inférieure à 10°C/min ;
- maintien à la température T₁ pendant une durée t₁ ;
- refroidissement à la température ambiante et maintien à cette température sur une durée totale de 1,5 heures.

Après le conditionnement, les échantillons sont déposés sur une plaque chauffée à la température de 180°C : l'apport d'énergie est si rapide que l'on peut considérer comme infinie la vitesse de montée en température.

On observe l'apparition de bulles à l'intérieur de la structure feuilletée et l'on mesure après combien de temps t_{B} apparaît la première bulle.

On soumet également à ce test un échantillon témoin qui n'a pas subi le conditionnement thermique.

Les résultats obtenus en faisant varier T₁ et t₁ sont consignés dans le tableau 1 suivant.

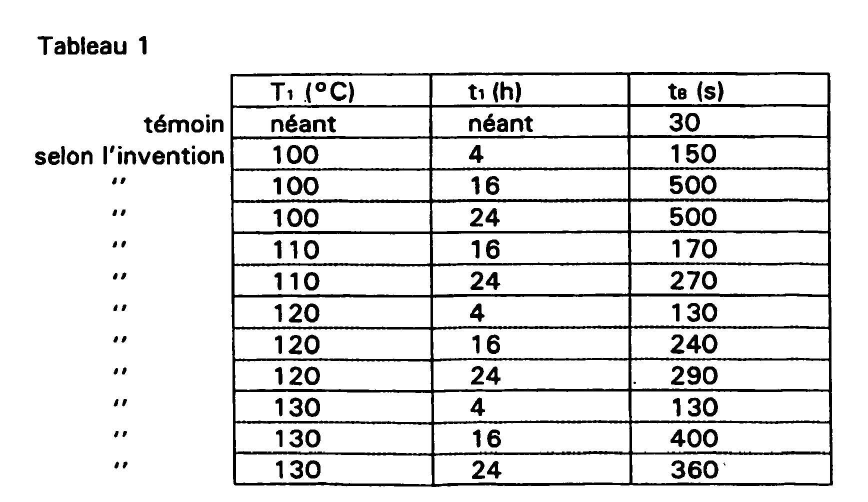

On procède à un essai d'encapsulation en conditions de production industrielle d'un vitrage automobile. La matière surmoulée étant de l'EPDM, la technique d'encapsulation consiste à déposer le vitrage feuilleté dans un moule chaud, à 180°C environ, à fermer le moule, à injecter la matière sous haute pression, à maintenir l'ensemble pendant 90 à 180 s dans le moule chaud pour assurer la vulcanisation de la matière EPDM, à ouvrir le moule puis démouler la pièce encapsulée. Le temps de cycle est de 3 minutes environ dont une minute 30 secondes à 2 minutes pendant lesquelles une partie du vitrage (surtout la périphérie en contact avec le moule) est portée à une température proche de la température du moule, c'est à dire 180°C. Le vitrage a été soumis au conditionnement thermique suivant :
- montée en température à 10°C/min jusqu'à 100°C
- maintien en température pendant 16 heures
- refroidissement et maintien à température ambiante 1 heure et trente minutes avant encapsulation.

Dans ces conditions le vitrage a été encapsulé avec succès sans aucune apparition de bulles au sein de la structure feuilletée.

Une autre série d'essais d'encapsulation a été conduite dans les mêmes conditions sur un vitrage feuilleté avec un film intercalaire multicouche PVB/PET.

Les résultats obtenus en faisant varier la température T₁ sont consignés dans le tableau 2 suivant.

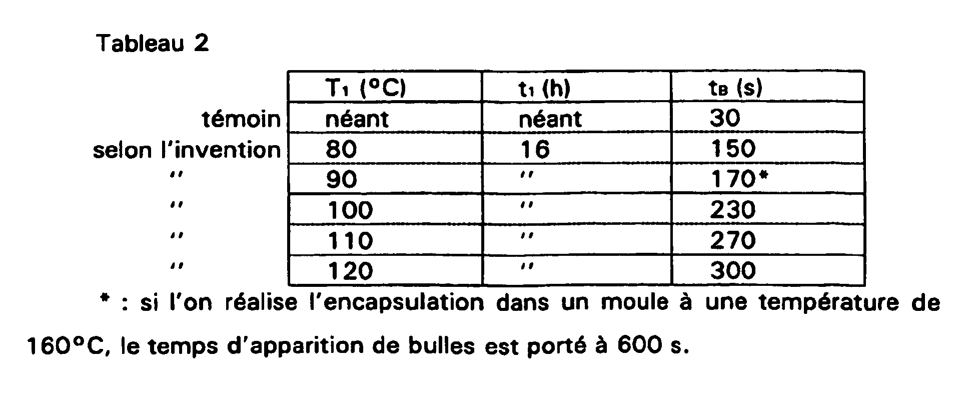

Quand on augmente le temps de repos du vitrage traité à 110°C avant de le mettre dans le moule à 180°C, le temps d'apparition de bulles chute à environ 80 s pour un temps de repos de 150 h.

Il ressort de ces essais qu'il est possible de retarder de plusieurs minutes l'apparition des bulles due au chauffage du verre feuilleté grâce au procédé selon l'invention.

Un palier prolongé pendant 16 h est préférable au palier de 4 h, mais il n'est généralement pas utile de prolonger le palier jusqu'à 24 h. Par ailleurs, les résultats obtenus sont sensiblement améliorés lorsque la température de traitement augmente.

La description qui vient d'être faite, insistant plus particulièrement sur l'équipement d'un vitrage feuilleté avec un élément de matière plastique formé in situ, n'est pas limitative et l'invention est apte à s'appliquer à bien d'autres types de conditions de sollicitation thermique d'un vitrage feuilleté.

## Revendications

1. Procédé de traitement d'un vitrage feuilleté en vue d'une opération ultérieure où le vitrage sera soumis à une forte sollicitation thermique, notamment porté à une température d'au moins 80°C, dans lequel on soumet le vitrage à un conditionnement thermique où l'on chauffe progressivement le vitrage à une vitesse de montée en température modérée ou des vitesses de montée en température chacune modérée quand le chauffage progressif est opéré en ménageant plusieurs tranches avec des vitesses de montée en température différentes, la vitesse ou les vitesses de montée en température étant de préférence inférieure(s) à 10°C/min et où l'on maintien le vitrage à une température de traitement minimale de 80°C et maximale de 150°C pendant une durée totale d'au moins 1 heure, notamment au moins 4 heures.

2. Procédé selon la revendication 1, **caractérisé en ce que** l'on chauffe progressivement le vitrage jusque dans la plage de température de l'ordre de 80 à 140°C, notamment 90 à 140°C.

3. Procédé selon la revendication 1 ou 2, **caractérisé en ce que** le chauffage comprend une montée en température progressive jusqu'à une température de traitement T₁ inférieure ou égale à 150°C et au moins un palier de température chacun à une température de traitement Tᵢ (où i est un entier non nul) inférieure ou égale à 150°C.

4. Procédé selon l'une quelconque des revendications précédentes, **caractérisé en ce que** l'on chauffe le vitrage pendant une durée totale inférieure ou égale à 16 heures.

5. Procédé selon l'une quelconque des revendications précédentes, **caractérisé en ce que** le conditionnement thermique comporte ensuite une étape, pendant une durée t₂, où l'on laisse le vitrage refroidir jusqu'à une température T₂, et on le maintient éventuellement à cette température.

6. Procédé selon la revendication 5, **caractérisé en ce que** T₂ est la température ambiante.

7. Procédé selon la revendication 6, **caractérisé en ce que** la durée t₂ du refroidissement et du maintien éventuel à la température T₂ est inférieure à 24 heures, notamment de 1 à 7 heures.

8. Procédé selon l'une quelconque des revendications 5 à 7, **caractérisé en ce que** l'on refroidit rapidement le vitrage jusqu'à la température T₂.

9. Application du procédé selon l'une quelconque des revendications 1 à 8 à la préparation d'un vitrage feuilleté pour subir un traitement comportant une opération dans laquelle le vitrage est porté à une température d'au moins 80°C.

## Claims

1. A process for treating laminated glazing with a view to a subsequent operation in which the glazing will be subjected to substantial thermal stressing, especially taken to a temperature of at least 80°C, in which the glazing is subjected to thermal conditioning in which it is gradually heated at a moderate rate of temperature rise or at several moderate rates of temperature rise when the gradual heating is operated by realizing several steps with different rates of temperature rise, the rate(s) of temperature rise being preferably less than 10°C/min and in which the glazing is maintained at a minimal treatment temperature of 80°C and at a maximum treatment temperature of 150°C for a total time of at least 1 hour, especially at least 4 hours.

2. The process as claimed in claim 1, **characterized in that** the glazing is heated gradually into the temperature range of around 80 to 140°C, particularly 90 to 140°C.

3. The process as claimed in claim 1 or 2, **characterized in that** the heating comprises a gradual temperature rise up to a treatment temperature T₁ of less than or equal to 150°C and at least one temperature hold, each at a treatment temperature Tᵢ (where i is a non zero integer) of less than or equal to 150°C.

4. The process as claimed in any one of the preceding claims, **characterized in that** the glazing is heated for a total time of less than or equal to 16 hours.

5. The process as claimed in any one of the preceding claims, **characterized in that** the thermal conditioning then includes a step, for a time t₂, in which the glazing is left to cool down to a temperature T₂ and it is optionally maintained at this temperature.

6. The process as claimed in claim 5, **characterized in that** T₂ is room temperature.

7. The process as claimed in claim 5, **characterized in that** the duration t₂ of the cooling down to, and of the optional hold at, the temperature T₂ is less than 24 hours, especially 1 to 7 hours.

8. The process as claimed in any one of claims 5 to 7, **characterized in that** the glazing is cooled rapidly down to the temperature T₂.

9. The application of the process as claimed in any one of claims 1 to 8 to the preparation of laminated glazing in order to undergo a treatment comprising an operation in which the glazing is taken to a temperature of at least 80°C.

## Patentansprüche

1. Verfahren zur Behandlung einer Verbundglasscheibe für einen späteren Arbeitsgang, in welchem die Verbundglasscheibe einer starken thermischen Beanspruchung unterworfen und insbesondere auf eine Temperatur von mindestens 80 °C gebracht wird, wobei in dem Verfahren die Verbundglasscheibe einer thermischen Konditionierung unterzogen wird, in welcher sie fortschreitend mit einer moderaten Temperaturanstiegsgeschwindigkeit oder jeweils moderaten Temperaturanstiegsgeschwindigkeiten, wenn das fortschreitende Erhitzen durchgeführt wird, indem mehrere Abschnitte mit unterschiedlichen Temperaturanstiegsgeschwindigkeiten eingehalten werden, erhitzt wird, wobei die Temperaturanstiegsgeschwindigkeit(en) vorzugsweise kleiner als 10 °C/min ist (sind) und die Verbundglasscheibe auf einer Mindestbehandlungstemperatur von 80 °C und einer Höchstbehandlungstemperatur von 150 °C einen Gesamtzeitraum von mindestens 1 Stunde und insbesondere von mindestens 4 Stunden lang gehalten wird.

2. Verfahren nach Anspruch 1, **dadurch gekennzeichnet, dass** die Verbundglasscheibe bis in einen Temperaturbereich von etwa 80 bis 140 °C und insbesondere 90 bis 140 °C fortschreitend erhitzt wird.

3. Verfahren nach Anspruch 1 oder 2, **dadurch gekennzeichnet, dass** das Erhitzen einen fortschreitenden Temperaturanstieg bis auf eine Behandlungstemperatur T₁ von unter oder gleich 150 °C und mindestens eine jeweilige Temperaturhaltestufe auf einer Behandlungstemperatur Tᵢ (wobei i eine ganze Zahl ungleich null ist) von unter oder gleich 150 °C umfasst.

4. Verfahren nach einem der vorhergehenden Ansprüche, **dadurch gekennzeichnet, dass** die Verbundglasscheibe einen Gesamtzeitraum von kürzer als oder gleich 16 Stunden erhitzt wird.

5. Verfahren nach einem der vorhergehenden Ansprüche, **dadurch gekennzeichnet, dass** die thermische Konditionierung anschließend einen Schritt während eines Zeitraumes t₂ umfasst, in welchem die Verbundglasscheibe bis auf eine Temperatur T₂ abgekühlt wird, und sie gegebenenfalls auf dieser Temperatur gehalten wird.

6. Verfahren nach Anspruch 5, **dadurch gekennzeichnet, dass** T₂ die Umgebungstemperatur ist.

7. Verfahren nach Anspruch 6, **dadurch gekennzeichnet, dass** der Zeitraum t₂ der Abkühlung und des möglichen Haltens auf der Temperatur T₂ weniger als 24 Stunden und insbesondere 1 bis 7 Stunden beträgt.

8. Verfahren nach einem der Ansprüche 5 bis 7, **dadurch gekennzeichnet, dass** die Verbundglasscheibe bis auf die Temperatur T₂ schnell abgekühlt wird.

9. Anwendung des Verfahrens nach einem der Ansprüche 1 bis 8 auf die Herstellung einer Verbundglasscheibe, um mit dieser eine Behandlung durchzuführen, die einen Arbeitsgang umfasst, in welchem die Verbundglasscheibe auf eine Temperatur von mindestens 80 °C gebracht wird.
